# EUROPÄISCHE PATENTSCHRIFT

(11) **EP 0 268 764 B1**
(45) Veröffentlichungstag und Bekanntmachung des Hinweises auf die Patenterteilung: **13.01.1993**
(21) Anmeldenummer: 87113018.3
(22) Anmeldetag: 05.09.1987
(51) Int. Cl.: F16D 55/228, F16D 65/16, F16D 65/853, B60T 11/18

(54) **Hydraulisch betätigte Scheibenbremse eines Kraftfahrzeugs**
Hydraulically actuated disc brake for a motor vehicle
Frein à disque hydraulique pour véhicule automobile

(30) Priorität: 24.11.1986 DE 3640056
(43) Veröffentlichungstag der Anmeldung: 01.06.1988
(73) Patentinhaber: Dr.Ing.h.c. F. Porsche Aktiengesellschaft, 70435 Stuttgart (DE)
(72) Erfinder: Kroniger, Wilhelm, D-7251 Friolzheim (DE)

(56) Entgegenhaltungen:
- DE-A- 1 755 935
- DE-B- 1 095 065
- DE-B- 1 284 724
- FR-A- 1 001 791
- FR-A- 1 273 303
- FR-A- 1 588 504
- FR-A- 2 198 857
- FR-A- 2 422 533
- GB-A- 1 271 602

## Beschreibung

Die Erfindung bezieht sich auf eine hydraulisch betätigte Scheibenbremse nach dem Oberbegriff des Anspruchs 1.

Aus der DE-B-12 84 724 ist eine hydraulisch betätigte Scheibenbremse bekannt, die in einem Bremssattel angeordnete und in Zylindern geführte Bremskolben umfaßt, deren Zylinder über einen Ringkanal miteinander verbunden sind. Diese bekannte Scheibenbremse ist mit zwei Bremskolben versehen, die sich im Bremssattel gegenüberstehen, wobei der verbindende Ringkanal so ausgeführt wird, daß eine gemeinsame Ein- und Auslaßöffnung entsteht, die zentrisch zu einem Kolben angeordnet ist. Über Rückschlagventile, die im Ringkanal jeweils im Bereich der Verbindung der beiden U-förmigen Bremssattelhälften, d.h. um 90° versetzt zu den Kolben angeordnet sind, erfolgt eine Zu- und Abführung der Bremsflüssigkeit beim Betätigen der Scheibenbremse. Bei einer solchen Ausführung ist beim Lösen der Bremse nur ein unzureichender Austausch der Bremsflüssigkeit innerhalb des Bremssattels möglich, d.h. es erfolgt hauptsächlich ein Austausch innerhalb des Kanals zwischen der Deckel- und Flanschseite des Bremssattels. Beim Lösen der Bremse wird ein Teil der ausgestoßenen Bremsflüssigkeit des hinteren Bremszylinders in den inneren Ringkanal zur Auslaßöffnung weitergefördert, wogegen ein weiterer Teil im Bereich des vorderen Bremszylinders verbleibt, so daß bei einem nachfolgenden Bremsvorgang die gleiche nur geringfügig abgekühlte Bremsflüssigkeit die Kolben beaufschlagen wird. Es erfolgt bei dieser Ausführung somit kein vollständiger Austausch der Bremsflüssigkeit, insbesondere kein Austausch der entfernt von der Auslaßöffnung vorhandenen Bremsflüssigkeit des hinteren Zylinders und somit kann auch keine wirkungsvolle Kühlung erfolgen. Desweiteren ist aus der FR-A-2 422 533 eine hydraulisch betätigte Scheibenbremse bekannt, bei der beiderseits einer Bremsscheibe in einem Bremssattel in Zylindern geführte hydraulisch betätigbare Bremskolben vorgesehen sind. Die gegenüberstehenden Zylinder sind in beiden Seiten eines Bremssattels zu einer Radbremse über einen durchgehenden Kanal nacheinander verbunden, an den eine Hydraulik-Zuleitung anschließt. Diese ist an eine Einlaßleitung über ein durch Bremsdruck öffnendes erstes Rückschlagventil und über eine Auslaßleitung (die zu den anderen (Scheiben)-Bremsen weiterführt und dann) unter Zwischenschaltung eines zweiten durch Bremsdruck schließenden Rückschlagventils angeschlossen.

Die Aufgabe der Erfindung ist es eine Scheibenbremse mit einem solchen Umlauf und Austausch der Bremsflüssigkeit bei Betätigung der Bremsen zu schaffen, daß eine übermäßige Erwärmung und damit Gasbildung vermieden wird.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Die mit der Erfindung hauptsächlich erzielten Vorteile bestehen darin, daß eine vollständige Flüssigkeitsumwälzung erfolgt und die in den Räumen der Zylinder beim Bremsen erwärmte Flüssigkeit ausgetauscht wird, so daß einer Gasblasenbildung entgegengewirkt wird.

Insbesondere weist der die Zylinder hintereinander verbindende innere Kanal eine von der Einlaßöffnung getrennte Auslaßöffnung auf, so daß hier schon eine räumliche Trennung von warmer und kalter Bremsflüssigkeit erfolgt. Außerdem ist der Kanal so ausgelegt, daß das Volumen der in den Zylindern beim Bremsen vorhandenen Bremsflüssigkeit beim Lösen der Bremse vollständig über die Auslaßöffnung herausgeschoben wird und bei einem erneuten Bremsen nur kalte Bremsflüssigkeit dem Kanal durch die Einlaßöffnung zuführbar ist.

Die unmittelbar benachbarte Zuordnung der Öffnungen zu den jeweiligen Zylindern im Bremssattel hat den Vorteil einer geringen Kanallänge, somit ist ein schneller Austausch der Flüssigkeit gewährleistet. Eine optimierte Zu- und Abführung der Bremsflüssigkeit in die und aus den Zylinderräumen wird durch die Kanalein- und Ausmündung in den Bereich des größten Zylinderquerschnitts unterstützt.

Die von der Zuleitung abzweigende Auslaßleitung- in Strömungsrichtung der Bremsflüssigkeit beim Bremsen gesehen - mit ihrer Einmündung vor dem Einlaß- Rückschlagventil ergibt die Möglichkeit einer Zumischung der ausgestoßenen erwärmten Bremsflüssigkeit mit der neu zugeführten kalten Bremsflüssigkeit.

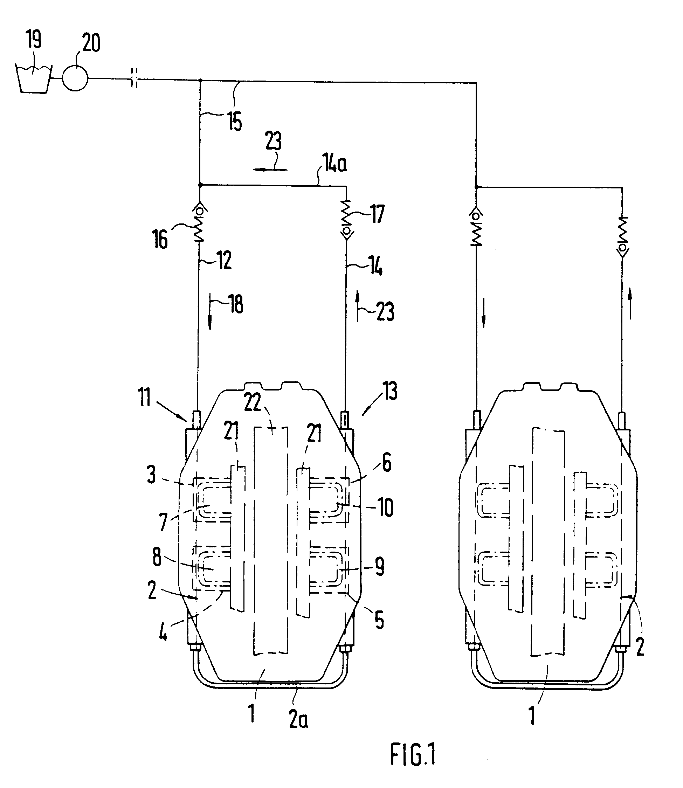

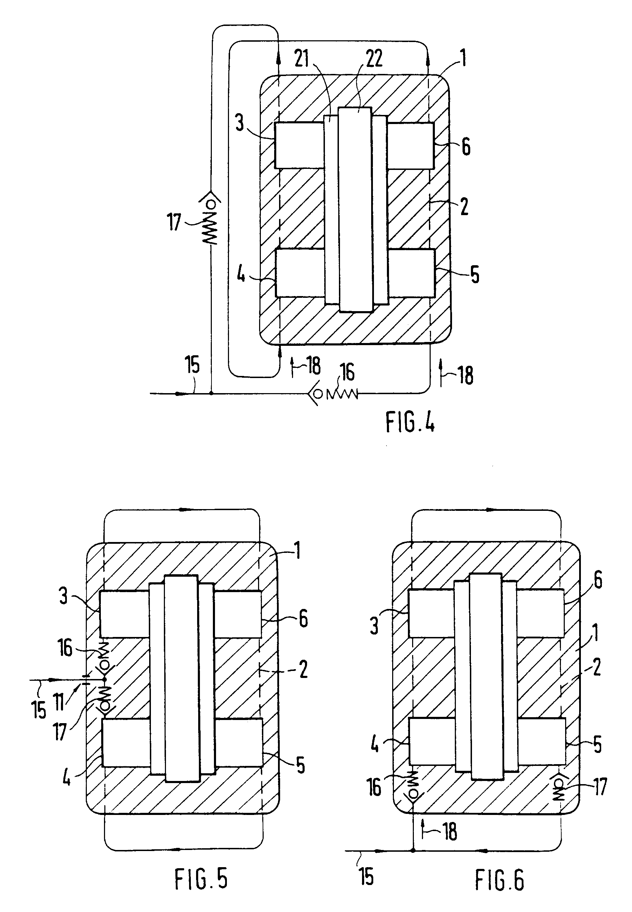

In Fig. 1 ist eine Ausführung mit einer entgegengesetzten Strömungsrichtung durch die Zylinder jeder Seite gezeigt. Es ist auch eine Ausführung mit gleicher Strömungsrichtung durch die Zylinder denkbar, wie Fig. 4 zeigt. Durch eine solche Ausführung sind verbesserte Entlüftungsverhältnisse zu schaffen.

Der Kanal im Bremssattel kann eine Einlaßöffnung aufweisen, die an einer beliebigen Stelle sitzt. In Fig. 5 ist die Einlaßöffnung beispielsweise zwischen den Zylindern einer Hälfte des Bremssattels angeordnet.

Auch können die Ventile starr außerhalb des Bremssattels oder auch innerhalb des Bremssattels angeordnet sein, wie die Fig. 5 und 6 zum Beispiel zeigen.

In den Zeichnungen sind jeweils Scheibenbremsen mit zwei Kolben in jeder Hälfte dargestellt. Die Kanalausbildung und Führung ist auch für Scheibenbremsen mit weniger als zwei Kolben und mehr als zwei Kolben pro Hälfte des Bremssattels anwendbar.

Ein Ausführungsbeispiel der Erfindung ist in der Zeichnung dargestellt und wird im folgenden näher beschrieben.

Es zeigen:
- Fig. 1: eine schematische Darstellung eines Verlauf des inneren Kanals mit Zu- und Abführungsleitungen im Bremssattel für ein rechtes und linkes Kraftfahrzeugrad,

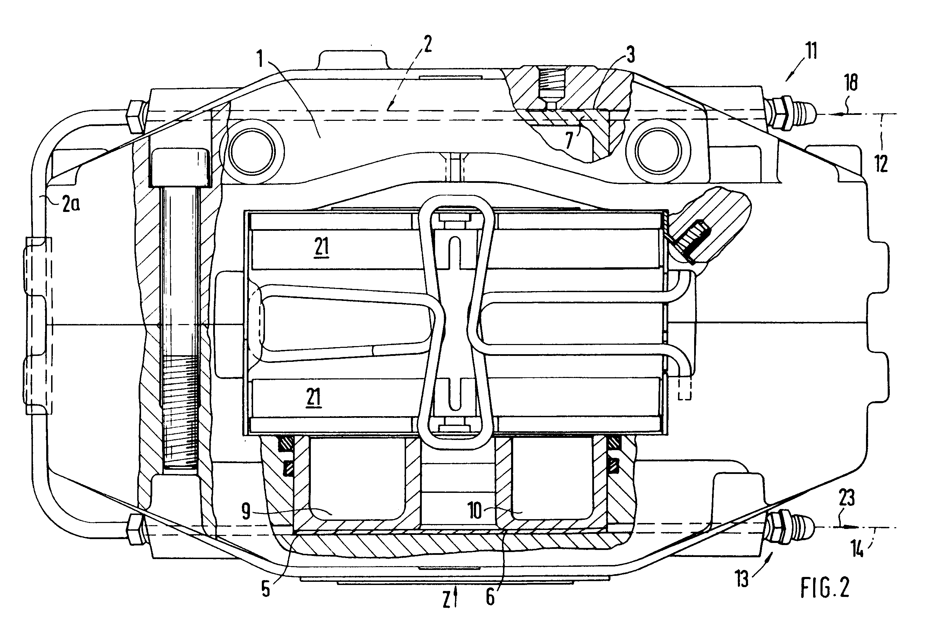

- Fig. 2: eine Darstellung des Bremssattels teilweise im Horizontalschnitt,
- Fig. 3: eine Seitenansicht der Bremse in Pfeilrichtung Z der Fig. 2 gesehen,
- Fig. 4: eine Darstellung einer Scheibenbremse mit einer gleichgerichteten Strömung in jeder Hälfte des Bremssattels,
- Fig. 5: eine Darstellung einer Scheibenbremse mit innenliegenden Ventilen zwischen zwei Zylindern einer Hälfte des Bremssattels und einer zwischen diesen Zylindern angeordneten Einlaßöffnung und
- Fig. 6: eine weitere Ausbildung einer Scheibenbremse mit innenliegenden Ventilen.

In Fig. 1 sind Bremssättel 1 für ein linkes und rechtes Rad eines Kraftfahrzeugs mit einem inneren Kanal 2 zur Durchleitung von Bremsflüssigkeit dargestellt, der die Zylinder 3 bis 6 für die Bremskolben 7 bis 10 verbindet.

Im Bremssattel 1 der Scheibenbremse sind in jeder Hälfte zwei Bremskolben 7, 8 und 9, 10 in den Zylindern 3, 4 und 5,6 angeordnet, die sich gegenüberstehen. Der Kanal 2 verbindet diese Zylinder durchgehend miteinander, wobei zwischen den hinteren Zylindern 4 und 5 eine außenliegende U-förmige Verbindungsleitung 2a vorgesehen ist, die zur Kühlung des Mediums beiträgt. Nahe dem ersten Zylinder 3 ist eine Einlaßöffnung 11 für eine Zuführleitung 12 und nahe des vierten Zylinders 6 ist eine weitere Öffnung 13 für eine Auslaßleitung 14 vorgesehen. Diese beiden Öffnungen 11 und 13 sind getrennt voneinander im Bremssattel 1 angeordnet.

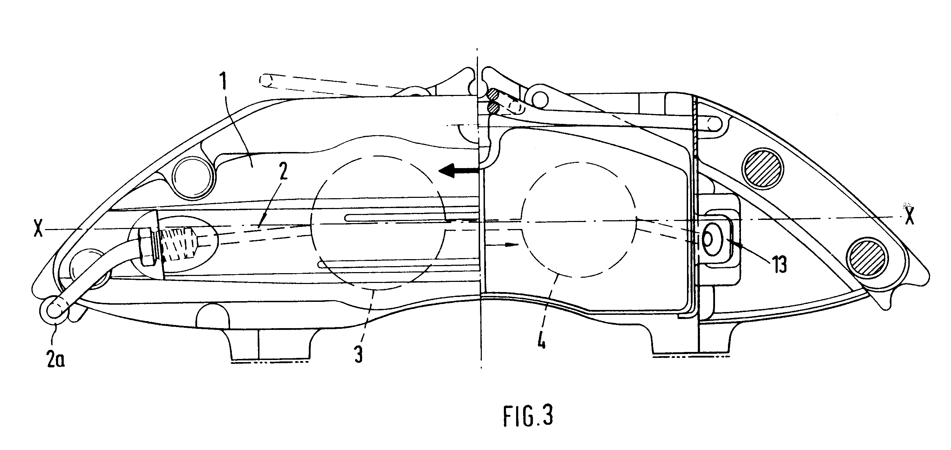

Der im Inneren des Bremssattels 1 verlaufende Kanal 2 ist vorzugsweise in einer Horizontalebene X-X die durch die Mittelebene der Kolben 7 bis 10 verläuft, angeordnet, wobei aufgrund baulicher Verhältnisse, wie Fig. 3 zeigt, ein geringer Anstieg und Abfall der Endabschnitte des Kanals 2 vorkommen kann.

Gleichzeitig ist der Kanal 2 quer zu den Zylindern 3 bis 6 bzw. zu den Kolben 7 bis 10 ausgerichtet und mündet jeweils quer in die Zylinder 3 bis 6 im Bereich ihrer größten Querschnittsfläche ein.

Nach Fig. 4 ist eine Ausbildung einer Scheibenbremse mit einem Bremssattel 1 vorgesehen, dessen Kanäle 2 in jeder Bremssattelhälfte mit einer gleichen Strömungsrichtung durchflossen werden. Dagegen erfolgt bei der Ausführung nach Fig. 1 eine gegensätzliche Strömungsrichtung in jeder Bremssattelhälfte. Nach den Fig. 5 und 6 sind weitere mögliche Ausbildungen von Scheibenbremsen dargestellt, die innerhalb des Bremssattels 1 angeordnete Ventile 16 und 17 aufweisen. Die Einlaßöffnung 11 in dem Kanal, kann wie z. B. Fig. 5 zeigt, an jeder beliebigen Stelle des Kanal 2 erfolgen.

Von einer gemeinsamen Hydraulik- Zuleitung 15 wird die Bremsflüssigkeit über ein erstes Rückschlagventil 16 und einer Zuführleitung 12 durch die Einlaßöffnung 11 in den Kanal 2 geleitet. Von hier aus durch die Zylinder 3 und 4 über die U- förmige Verbindungsleitung 2a in die Zylinder 5, 6 und durch die Öffnung 13 in die Auslaßleitung 14. Bevor diese in die Zuleitung 15 einmündet, ist ein zweites Rückschlagventil 17 zwischengeschaltet. Die Rückschlagventile 16 und 17 haben jeweils eine gleiche Ausbildung sind jedoch miteinander entgegengerichteter Sperrichtung eingebaut. Die nach dem Rückschlagventil 17 angeschlossene Auslaßleitung 14a mündet in die gemeinsame Zuleitung 15 - in bezug auf die Strömungsrichtung 18 - vor dem ersten Rückschlagventil 16 in diese ein.

Beim Betätigen der Bremse wird von einem Speicher 19 über ein Hauptbremszylinder 20 Bremsflüssigkeit über die Zuleitung 15 der Leitung 16 dem Kanal 2 zugeführt. Das erste Ventil 16 öffnet durch den anstehenden Druck selbsttätig, wogegen das zweite Ventil 17 geschlossen bleibt. Die Zylinder 3 bis 6 füllen sich mit Bremsflüssigkeit und die Kolben 7 bis 10 werden gegen Bremsbacken 21 gepreßt, die sich wiederum an eine Bremsscheibe 22 anlegen. Beim Lösen der Bremse verstellen sich die Kolben 7 bis 10 wieder in ihre Ausgangslage (Fig. 1); die Bremsflüssigkeit wird aus den Zylindern 3 bis 6 in den Kanal 2 gepreßt und über diese wird das gesamte Volumen der in den Zylinderräumen ursprünglich vorhandene Bremsflüssigkeit über die Auslaßöffnung 13 in Pfeilrichtung 23 bei sich öffnendem Ventil 17 in die Leitungen 14, 14a und sowie teilweise in die Zuleitung 15 gedrückt. In diesen außenliegenden Leitungen 14, 14a und 15 erfolgt dann ein teilweise Abkühlen der erwärmten Bremsflüssigkeit. Bei einem erneuten Bremsen wird dann abgekühlte Bremsflüssigkeit in den Kreislauf der Bremse in den Bremssattel eingeführt.

## Patentansprüche

1. Hydraulisch betätigte Scheibenbremse eines Kraftfahrzeugs mit beiderseits einer Bremsschreibe (22) in einem Bremssattel (1) angeordneten und in Zylindern (3, 4, 5 und 6) geführten hydraulisch betätigbaren Bremskolben (7, 8, 9 und 10), wobei die Zylinder (3, 4, 5 und 6) der einem Rad zugeordneten Bremse über einen durchgehenden Kanal (2) nacheinander verbunden sind, **dadurch gekennzeichnet,** daß der Kanal (2) eine den letzten Zylinder (4) der ersten Seite des Bremssattels (1) mit dem ersten Zylinder (5) der zweiten Seite des Bremssattels (1) verbindende U-förmige Leitung (2a) aufweist, die außerhalb des Bremssattels (1) liegt, und daß jeder Kanal eines Rades über eine ein durch Bremsdruck öffnendes erstes Rückschlagventil (16) aufweisende Einlaßleitung (12) und über eine ein durch Bremsdruck schließendes zweites Rückschlagventil (17) aufweisende Auslaßleitung (14) direkt mit einer Hydraulik-Zuleitung (15) verbunden ist.

2. Scheibenbremse nach Anspruch 1, **dadurch gekennzeichnet,** daß der Kanal (2) in einer etwa horizontalen Kolbenmittelebene (X-X) angeordnet ist und quer zu den Zylindern (3, 4 und 5, 6) verläuft und in die Zylinder (3 bis 6) im Bereich ihrer größten Querschnittsfläche einmündet.

3. Scheibenbremse nach den Ansprüchen 1 und 2, **dadurch gekennzeichnet,** daß der Kanal (2) alle Zylinder (3 bis 6) dergestalt nacheinander verbindet, daß die Bremsflüssigkeit der Druckräume in den Zylindern (3 bis 6) vom ersten bis zum letzten Kolben (7 bis 10) beim Lösen der Bremse den Leitungen (14, 14a, 15) außerhalb des innenliegenden Kanals (2) zugeführt wird.

4. Scheibenbremse nach den Ansprüchen 1, 2 und 3, **dadurch gekennzeichnet,** daß die Ventile (16, 17) innerhalb des Bremssattels (1) angeordnet sind.

5. Scheibenbremse nach einem oder mehreren der vorhergehenden Ansprüche, **dadurch gekennzeichnet,** daß der Kanal (2) zwischen den Zylindern (3, 4 bzw. 5, 6) eine Einlaßöffnung (11) aufweist, die mit der Hydraulik-Zuleitung (15) verbunden ist.

6. Scheibenbremse nach einem oder mehreren der vorhergehenden Ansprüche, **dadurch gekennzeichnet,** daß der Kanal (2) eine Einlaßöffnung (11) zwischen den Zylindern (3 und 6 bzw. 4 und 5) aufweist, die mit der Hydraulik-Zuleitung (15) verbunden ist.

## Claims

1. An hydraulically actuated disc brake of a motor vehicle, having hydraulically actuable brake pistons (7, 8, 9 and 10) arranged on both sides of a brake disc (22) in a brake calliper (1) and guided in cylinders (3, 4, 5 and 6), the cylinders (3, 4, 5 and 6) of the brake associated with one wheel being connected in succession by way of a through duct (2), characterized in that the duct (2) comprises a U-shaped line (2a) connecting the last cylinder (4) of the first side of the brake calliper (1) to the first cylinder (5) of the second side of the brake calliper (1) and lying outside the brake calliper (1), and each duct of a wheel is directly connected to an hydraulic supply line (15) by way of an inlet line (12) having a first non-return valve (16) opening by brake pressure and by way of an outlet line (14) having a second non-return valve (17) closing by brake pressure.

2. A disc brake according to Claim 1, characterized in that the duct (2) is arranged in a substantially horizontal median plane (X-X) of the pistons and extends transversely to the cylinders (3, 4, 5 and 6) and opens into the cylinders (3 to 6) in the region of their greatest cross-sectional area.

3. A disc brake according to Claims 1 and 2, characterized in that the duct (2) connects all the cylinders (3 to 6) in succession in such a way that the brake fluid of the pressure chambers in the cylinders (3 to 6) from the first to the last piston (7 to 10) is conveyed to the lines (14, 14a, 15) outside the inside duct (2) when the brake is released.

4. A disc brake according to Claims 1, 2 and 3, characterized in that the valves (16, 17) are arranged inside the brake calliper (1).

5. A disc brake according to one or more of the preceding Claims, characterized in that between the cylinders (3, 4 and 5, 6 respectively) the duct (2) has an inlet opening (11) connected to the hydraulic supply line (15).

6. A disc brake according to one or more of the preceding Claims, characterized in that between the cylinders (3 and 6, and 4 and 5 respectively) the duct (2) has an inlet opening (11) connected to the hydraulic supply line (15).

## Revendications

1. Frein à disque à commande hydraulique d'un véhicule automobile, comportant, des deux côtés d'un disque (22), des pistons (7, 8, 9 et 10) actionnés hydrauliquement, montés dans un étrier (1) et guidés dans des cylindres (3, 4, 5 et 6), les cylindres (3, 4, 5 et 6) du frein à associer à une roue étant reliés l'un après l'autre par un canal (2) continu, caractérisé en ce que le canal (2) comporte un conduit (2a) en U reliant le dernier cylindre (4) du premier côté de l'étrier (1) au premier cylindre (5) du second côté de l'étrier (1), lequel conduit se situe à l'extérieur de l'étrier (1) et en ce que chaque canal d'une roue est directement relié à une arrivée de fluide hydraulique (15), par un conduit d'arrivée (12) comportant une première soupape de non-retour (16), s'ouvrant par pression du frein et par un conduit de départ (14) comportant une seconde soupape de non-retour (17), se fermant par pression du frein.

2. Frein à disque selon la revendication 1, caractérisé en ce que le canal (2) est situé dans un plan médian (X-X) à peu près horizontal du piston et s'étend transversalement aux cylindres (3, 4 et 5, 6) et débouche dans les cylindres (3 à 6), dans la zone de leur plus grande section transversale.

3. Frein à disque selon les revendications 1 et 2, caractérisé en ce que le canal (2) relie l'un après l'autre tous les cylindres (3 à 6) de manière que le liquide de freinage des chambres de pression des cylindres (3 à 6) soit envoyé aux conduits (14, 14a, 15) situés à l'extérieur du canal (2) intérieur, du premier au dernier piston (7 à 10), lorsque l'on relâche le frein.

4. Frein à disque selon les revendications 1, 2 et 3, caractérisé en ce que les soupapes (16, 17) sont montées à l'intérieur de l'étrier (1) du frein.

5. Frein à disque selon une ou plusieurs des revendications précédentes, caractérisé en ce que le canal (2) comporte, entre les cylindres (3, 4 ou 5, 6) une ouverture d'entrée (11) qui est reliée à l'arrivée de fluide hydraulique (15).

6. Frein à disque selon une ou plusieurs des revendications précédentes, caractérisé en ce que le canal (2) comporte une ouverture d'entrée (11), entre les cylindres (3 et 6 ou 4 et 5) qui est reliée avec l'arrivée de fluide hydraulique (15).
